# EUROPEAN PATENT APPLICATION

(11) **EP 4 629 693 A1**
(43) Date of publication of application: **08.10.2025**
(21) Application number: 23915848.8
(22) Date of filing: 29.12.2023
(51) Int. Cl.: H04W 36/00

(54) **SESSION UPDATING METHOD AND APPARATUS, NETWORK FUNCTION AND STORAGE MEDIUM**

(30) Priority: 09.01.2023 CN 202310029497
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HUANG, Zhenning, Beijing 100053 (CN); LI, Dan, Beijing 100053 (CN); MA, Wanming, Beijing 100053 (CN); LI, Aihua, Beijing 100053 (CN); WANG, Dan, Beijing 100053 (CN); WEI, Bin, Beijing 100053 (CN); ZHANG, Hao, Beijing 100053 (CN)
(74) Representative: Murgitroyd & Company
(86) International application number: PCT/CN2023/143331
(87) International publication number: WO 2024/149095

(57) **Abstract**

A session update method and apparatus, a network function and a storage medium are provided. The method includes: a first network function supports triggering at least one of the following operations: Time Sensitive Communication and Time Synchronization Function (TSCTSF)-based session establishment or insertion of the TSCTSF or deletion of the TSCTSF; session reestablishment with a Policy Control Function (PCF) or the TSCTSF; session redirection; or sending at least one information to a second network function.

## Description

### CROSS-REFERENCE TO RELATED APPLICATION

The present application is based on, and claims a priority of the Chinese patent application No. 202310029497.9 filed in China on January 9, 2023, a disclosure of which is incorporated herein by reference in its entirety.

### TECHNICAL FIELD

The present application relates to the field of communications technology, and in particular, to a session update method, a session update apparatus, a network function and a storage medium.

### BACKGROUND

At present, when an Application Function (AF) requests a Network Exposure Function (NEF) to update a Quality of Service (QoS) of a session, the NEF only allows a network element associated with an original session to be triggered to perform a QoS update. This may lead to a failure in a QoS update process and adversely affect the timeliness of a network.

### SUMMARY

To solve related technical problems, an embodiment of the present application provides a session update method, a session update apparatus, a network function and a storage medium.

The technical solutions of the embodiments of the present application are implemented as follows.

An embodiment of the present application provides a session update method, which is applied to a first network function, including:
supporting triggering at least one of the following operations:
Time Sensitive Communication and Time Synchronization Function (TSCTSF)-based session establishment or insertion of the TSCTSF or deletion of the TSCTSF;
session reestablishment with a Policy Control Function (PCF) or the TSCTSF;
session redirection; or
sending at least one information to a second network function.

In the above solution, the first network function includes a Network Exposure Function (NEF) or an Application Function (AF).

In the above solution, the first network function is the NEF, and correspondingly, the method further includes:
in the case that the NEF receives a session update request from the second network function, triggering the at least one of the operations.

In the above solution, the second network function includes an AF.

In the above solution, the supporting triggering the at least one of the following operations, including:
supporting triggering the at least one of the operations based on a first condition; wherein
the first condition includes at least one of the followings:
   operator configuration;
   a session update request from the second network function;
   an identifier of the second network function;
   a traffic characteristic parameter provided by the second network function; or
   a support capability, wherein the support capability represents an operation that is supported by the first network function and determined through capability negotiation.

In the above solution, the method further includes:
supporting selecting the TSCTSF by at least one of the followings:
selecting a TSCTSF that provides a time synchronization service;
selecting a TSCTSF based on operator configuration;
selecting a TSCTSF based on Time Sensitive Communication (TSC) information;
selecting a TSCTSF based on a session update request from the second network function;
selecting a TSCTSF based on an identifier of the second network function; or
selecting a TSCTSF associated with a first Policy Control Function (PCF), wherein the first PCF represents a PCF selected when a session is initially established.

In the above solution, the method further includes:
in the case of triggering the TSCTSF-based session establishment or the insertion of the TSCTSF, supporting at least one of the following operations:
creating a TSCTSF-based session;
sending first information to the TSCTSF to indicate that the TSCTSF-based session is an update of a PCF-based session; or
triggering an update of a PCF-based session.

In the above solution, in the case of triggering the TSCTSF-based session establishment or the insertion of the TSCTSF, a Quality of Service (QoS) request of the session obtained by the TSCTSF is sent by the first network function and/or the PCF.

In the above solution, the method further includes:
in the case of triggering the TSCTSF-based session establishment or the insertion of the TSCTSF, supporting sending at least one of the following information to the TSCTSF:
all or part of the traffic characteristic parameters carried in a session update request;
transmission reference information of a session; or
all or part of information of a first condition, wherein the first condition represents a condition for triggering the at least one of the operations.

In the above solution, the method further includes:
in the case of triggering the session reestablishment with the PCF or the TSCTSF, supporting at least one of the following operations:
triggering the TSCTSF-based session establishment;
sending second information to the TSCTSF to indicate that the TSCTSF-based session establishment is a completely new session establishment; or
triggering deletion of a PCF-based session.

In the above solution, the method further includes:
in the case of triggering the session reestablishment with the PCF or the TSCTSF, supporting sending at least one of the following information to the TSCTSF:
all or part of the traffic characteristic parameters carried in a session update request;
transmission reference information of a session;
all or part of information of a first condition, wherein the first condition represents a condition for triggering the at least one of the operations;
a QoS request of the session; or
an active QoS request or a historical QoS request after initial session establishment.

In the above solution, the traffic characteristic parameter carried in the session update request includes at least one of the followings:
a traffic burst arrival time;
a lifetime;
a traffic cycle;
a clock domain; or
a traffic direction.

In the above solution, in the case of triggering the session redirection, the method further includes:
selecting the TSCTSF; and/or
sending a session redirection request to the PCF.

In the above solution, the at least one information includes at least one of the followings:
rejecting a session update;
instructing the second network function to re-initiate a request;
instructing the second network function to re-initiate an initial request;
instructing the second network function to re-initiate a QoS parameter of the request;
instructing the second network function to resend a QoS request;
instructing the second network function to report a QoS request;
transmission reference information of a current session;
a reason for rejecting a request from the second network function; or
at least one unsatisfied parameter.

In the above solution, the reason for rejecting the request from the second network function includes at least one of the followings:
update of a session;
rejection of a request for update;
the QoS parameter that cannot be processed; or
a time sensitive QoS request that cannot be processed.

An embodiment of the present application further provides a session update method, which is applied to a Policy Control Function (PCF), including:
receiving a session redirection request sent by a first network function;
selecting a Time Sensitive Communication and Time Synchronization Function (TSCTSF) based on the session redirection request;
triggering selected-TSCTSF-based session establishment.

In the above solution, the method further includes:
sending, to the TSCTSF, at least one of the following information:
all or part of the traffic characteristic parameters carried in a session update request;
transmission reference information of a session;
all or part of information of a first condition, wherein the first condition represents a condition for triggering at least one operation;
a QoS request of the session; or
an active QoS request or a historical QoS request after initial session establishment.

In the above solution, the traffic characteristic parameter carried in the session update request include at least one of the followings:
a traffic burst arrival time;
a lifetime;
a traffic cycle;
a clock domain; or
a traffic direction.

In the above solution, the session redirection request carries TSC information of a session.

An embodiment of the present application further provides a session update apparatus, including:
a first processing unit, configured to support triggering at least one of the following operations:
Time Sensitive Communication and Time Synchronization Function (TSCTSF)-based session establishment or insertion of the TSCTSF or deletion of the TSCTSF;
session reestablishment with a Policy Control Function (PCF) or the TSCTSF;
session redirection; or
sending at least one information to a second network function.

An embodiment of the present application further provides a session update apparatus, including:
a receiving unit, configured to receive a session redirection request sent by a first network function;
a selection unit, configured to select a TSCTSF based on the session redirection request;
a second processing unit, configured to trigger selected-TSCTSF-based session establishment.

An embodiment of the present application further provides a first network function, including: a first processor and a first communication interface; wherein
the first communication interface is configured to support triggering at least one of the following operations:
Time Sensitive Communication and Time Synchronization Function (TSCTSF)-based session establishment or insertion of the TSCTSF or deletion of the TSCTSF;
session reestablishment with a Policy Control Function (PCF) or the TSCTSF;
session redirection; or
sending at least one information to a second network function.

An embodiment of the present application further provides a Policy Control Function (PCF), including: a second processor and a second communication interface; wherein
the second communication interface is configured to receive a session redirection request sent by a first network function;
the second communication interface is further configured to select a Time Sensitive Communication and Time Synchronization Function (TSCTSF) based on the session redirection request, and to trigger selected-TSCTSF-based session establishment.

An embodiment of the present application further provides a first network function, including: a first processor and a first memory configured to store a computer program executable on a processor,
wherein the first processor is configured to execute the computer program to perform the steps of any method on the first network function side.

An embodiment of the present application further provides a Policy Control Function (PCF), including: a second processor and a second memory configured to store a computer program executable on the processor,
wherein the second processor is configured to execute the computer program to perform the steps of any method on the PCF side.

An embodiment of the present application further provides a storage medium storing a computer program, characterized in that the computer program is used to be executed by a processor to implement the steps of any method on the first network function side, or implement the steps of any method on the PCF side.

In the session update method, apparatus, network function and storage medium provided by the embodiments of the present application, the first network function supports triggering at least one of the following operations: Time Sensitive Communication and Time Synchronization Function (TSCTSF)-based session establishment or insertion of the TSCTSF or deletion of the TSCTSF; session reestablishment with a Policy Control Function (PCF) or the TSCTSF; session redirection; or sending at least one information to a second network function. Based on the above solution, in the case that the second network function requests the session update, when it is determined that the original network element in the session needs to be changed, the session update process can still be guaranteed, thereby improving network performance.

### BRIEF DESCRIPTION OF THE DRAWINGS

FIG. 1 is a flow chart illustrating an implementation of a session update method according to an embodiment of the present application;
FIG. 2 is a flow chart illustrating an implementation of a session update method according to an embodiment of the present application;
FIG. 3 is an interaction flow chart of a session update method according to an embodiment of the present application;
FIG. 4 is an interaction flow chart of a session update method according to an embodiment of the present application;
FIG. 5 is an interaction flow chart of a session update method according to an embodiment of the present application;
FIG. 6 is a structural diagram of a session update apparatus according to an embodiment of the present application;
FIG. 7 is a structural diagram of a session update apparatus according to an embodiment of the present application;
FIG. 8 is a structural diagram of a first network function according to an embodiment of the present application;
FIG. 9 is a structural diagram of a Policy Control Function (PCF) according to an embodiment of the present application.

### DETAILED DESCRIPTION

In the related art, when an Application Function (AF) requests a Network Exposure Function (NEF) to update a Quality of Service (QoS) of a session, the NEF sends, based on an established session, a QoS update request only to a network element associated with an original session, including:
1. when the NEF determines to continue triggering the PCF, it sends the QoS update request to the PCF;
2. when the NEF determines to continue triggering the TSCTSF, it sends the QoS update request to the TSCTSF;
3. when the NEF determines not to trigger the network element associated with the original session for a QoS update, the NEF directly rejects AF's QoS update request.

According to the above description, the current 5th Generation Mobile Communication Technology (5G) network capabilities exhibit the following technical shortcomings: within a domain, the NEF is only allowed to trigger the network element associated with the original session for the QoS update. When the NEF determines that the TSCTSF or the PCF in the original session needs to change, the QoS update fails. Across domains, the NEF cannot indicate to the AF the range of QoS parameters that are allowed to be requested. The QoS update request sent by the AF may prevent the NEF from triggering the network element associated with the original session to perform the QoS update, resulting in a failure of the QoS update process. The above technical shortcomings may affect the timeliness of a network.

Based on this, in various embodiments of the present application, in the case that a second network function requests a session update, the first network function supports triggering at least one of the following operations: Time Sensitive Communication and Time Synchronization Function (TSCTSF)-based session establishment or insertion of the TSCTSF or deletion of the TSCTSF; session reestablishment with a Policy Control Function (PCF) or the TSCTSF; session redirection; or sending at least one indication representing the second network function requesting session update to the second network function. Based on the above solution, in the case that the second network function requests the session update, when it is determined that the original network element in the session needs to be changed, the session update process can still be guaranteed, thereby improving network performance.

The present application is further described in detail below in conjunction with the accompanying drawings and embodiments.

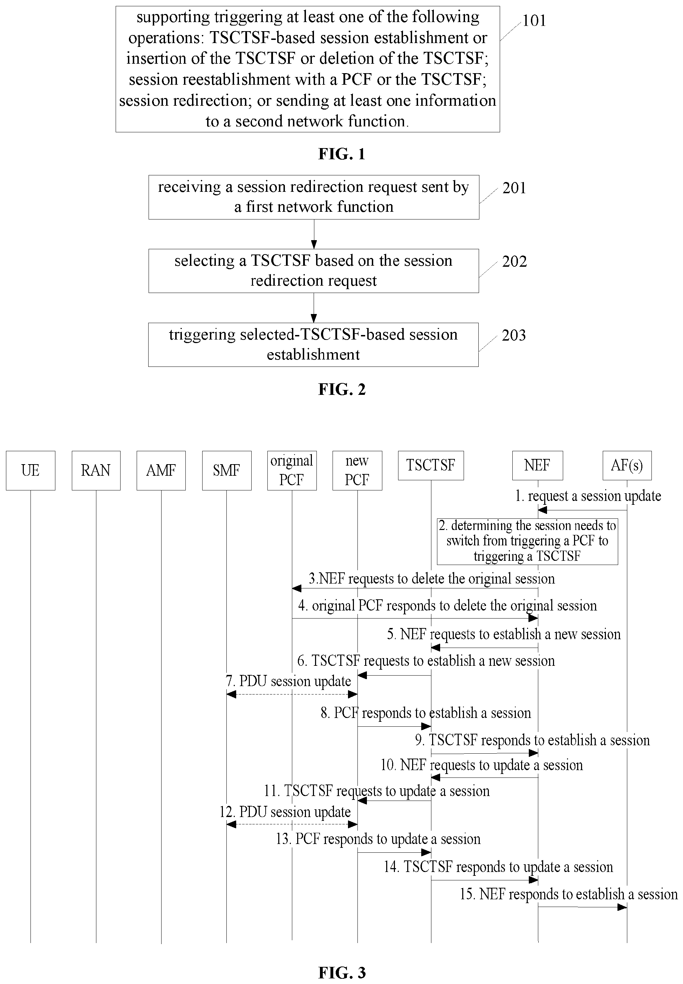

An embodiment of the present application provides a session update method, which is applied to a first network function. Referring to FIG. 1, the method includes the following:
step 101: supporting triggering at least one of the following operations:
Time Sensitive Communication and Time Synchronization Function (TSCTSF)-based session establishment or insertion of the TSCTSF or deletion of the TSCTSF;
session reestablishment with a Policy Control Function (PCF) or the TSCTSF;
session redirection; or
sending at least one information to a second network function.

The first network function includes a Network Exposure Function (NEF) or an Application Function (AF).

In the case that the first network function is the NEF, correspondingly, the method further includes:
in the case that the NEF receives a session update request from the second network function, triggering the at least one of the operations.

In the case that the first network function is the AF, correspondingly, the method further includes:
in case that the AF triggers the session update, triggering the at least one of the operations.

In practical applications, the second network function may be understood as the AF.

In an embodiment, the first network function supports triggering the at least one of the operations based on a first condition. In other words, the first network function can select which one or more of the operations to trigger based on the first condition.

The first condition includes at least one of the followings:
operator configuration;
a session update request from the second network function;
an identifier of the second network function;
a traffic characteristic parameter provided by the second network function; or
a support capability, wherein the support capability represents an operation that is supported by the first network function and determined through capability negotiation. In other words, the first network function can select which one or more operations to trigger based on its own supported capabilities for the operations through the capability negotiation.

In the above, the operator configuration may also be understood as a support capability pre-configured in the first network function.

In practical applications, the session update request from the second network function may specifically refer to the QoS parameters, QoS references, etc. in the session update request sent by the AF. The identifier of the second network function can be, for example, an AF identifier. The traffic characteristic parameter provided by the second network function, including but not limited to a traffic burst arrival time, a lifetime, a traffic cycle, a traffic direction, a clock domain and other parameters carried in the session update request from the second network function.

In the case that the second network function requests a session update, the first network function may also involve the selection of the TSCTSF in the case of triggering one or more operations. In an embodiment, the first network function supports selecting the TSCTSF by at least one of the followings:
selecting a TSCTSF that provides a time synchronization service;
selecting a TSCTSF based on operator configuration;
selecting a TSCTSF based on Time Sensitive Communication (TSC) information;
selecting a TSCTSF based on a session update request from the second network function;
selecting a TSCTSF based on an identifier of the second network function; or
selecting a TSCTSF associated with a first Policy Control Function (PCF), wherein the first PCF represents a PCF selected when a session is initially established.

In the TSCTSF that is associated with the first PCF, the association relationship may be understood as an association relationship in one or more of the following aspects:
configuration, a location, a capability, a name, pairing, network function discovery, registration information, and service scope.

In the case that the first network function triggers the TSCTSF-based session establishment or the insertion of the TSCTSF, the first network function supports at least one of the following operations:
creating a TSCTSF-based session;
sending first information to the TSCTSF to indicate that the TSCTSF-based session is an update of a PCF-based session; or
triggering an update of a PCF-based session.

In the case that the first network function triggers the deletion of the TSCTSF, the first network function supports triggering the update of the PCF -based session.

The PCF-based session refers to the session established with the PCF when the first network function initially creates the session. When sending the first information to the TSCTSF, the first network function may adopt an explicit indication method, for example, part or all of the first information carries information used to instruct the TSCTSF to perform one or more operations, enabling the TSCTSF to trigger the execution of the one or more operations upon receiving the first information. Alternatively, the first network function may adopt an implicit indication method, for example, the first information does not carry specific indication content, but the following configuration is performed on the TSCTSF side: as long as the first information is received, even if there is no specific indication content in the first information, the TSCTSF will trigger one or more operations that have been pre-negotiated.

In addition, the triggering of the update of the PCF-based session is used to indicate the insertion of the TSCTSF in the session or to indicate the TSCTSF-based session establishment.

In an embodiment of the present application, the first network function triggers the TSCTSF-based session establishment. In practical applications, for example, the first network function sends Ntsctsf_QoSandTSCAssistance_Create.

In addition, in the case that the first network function triggers the TSCTSF-based session establishment or the insertion of the TSCTSF, the TSCTSF needs to obtain the QoS request of the session, and/or an active QoS request or a historical QoS request after initial session establishment. The active QoS request or the historical QoS request specifically refers to the QoS request when the session has not changed. In an embodiment, the QoS request of the session obtained by the TSCTSF is sent by the first network function and/or the PCF. When the TSCTSF obtains the QoS request of the session from the PCF, it can adopt a method similar to that used by a target Inter mediate-Session Management Function (I-SMF) to obtain information from a source I-SMF in an I-SMF insertion process.

It should be noted that all QoS requests mentioned in the embodiments of the present application may, in practical applications, refer to a required QoS, or a QoS request, or a QoS requirement.

In an embodiment, the method further includes:
in the case of triggering the TSCTSF-based session establishment or the insertion of the TSCTSF, supporting sending at least one of the following information to the TSCTSF:
all or part of the traffic characteristic parameters carried in a session update request;
transmission reference information of a session; or
all or part of information of a first condition, wherein the first condition represents a condition for triggering the at least one of the operations.

The transmission reference information of the session refers to the transmission reference information of the session established with the PCF when the first network function initially creates the session, including but not limited to a session Identify (ID), a Uniform Resource Identifier (URI), transmission resources, etc.

In addition, in the case that the TSCTSF obtains from the PCF the QoS request of the session, and/or an active QoS request or a historical QoS request after initial session establishment, the first network function may not need to support sending the QoS request to the TSCTSF. In the case that the TSCTSF obtains from the first network function the QoS request, and/or an active QoS request or a historical QoS request after initial session establishment, the first network function also needs to support sending to the TSCTSF the QoS request, and/or the active QoS request or the historical QoS request after initial session establishment.

In the case of triggering the session reestablishment with the PCF or the TSCTSF, the first network function supports at least one of the following operations:
triggering the TSCTSF-based session establishment;
sending second information to the TSCTSF to indicate that the TSCTSF-based session establishment is a completely new session establishment; or
triggering deletion of a PCF-based session.

When sending the second information to the TSCTSF, the first network function may adopt an explicit indication method, for example, part or all of the second information carries information used to instruct the TSCTSF to perform one or more operations, enabling the TSCTSF to trigger the execution of the one or more operations upon receiving the second information. Alternatively, the first network function may adopt an implicit indication method, for example, the second information does not carry specific indication content, but the following configuration is performed on the TSCTSF side: as long as the first information is received, even if there is no specific indication content in the second information, the TSCTSF will trigger one or more operations that have been pre-negotiated.

In addition, the PCF-based session refers to the session established with the PCF when the first network function initially creates the session.

In an embodiment, the method further includes:
in the case of triggering the session reestablishment with the PCF or the TSCTSF, supporting sending at least one of the following information to the TSCTSF:
all or part of the traffic characteristic parameters carried in a session update request;
transmission reference information of a session;
all or part of information of a first condition, wherein the first condition represents a condition for triggering the at least one of the operations;
a QoS request of the session; or
an active QoS request or a historical QoS request after initial session establishment.

Compared with the case of triggering the TSCTSF-based session establishment or the insertion of the TSCTSF, in the case of triggering session reestablishment with the PCF or the TSCTSF, the first network function supports sending, to the TSCTSF, the QoS request of the session, and/or the active QoS request or the historical QoS request after initial session establishment (i.e., the QoS request when the session has not changed).

In the case of triggering the session redirection, the method further includes:
selecting the TSCTSF; and/or
sending a session redirection request to the PCF.

Specifically, in the case of triggering the session redirection, the selection of the TSCTSF is performed by the first network function or the PCF. When the selection of the TSCTSF is performed by the first network function, the first network function supports selecting the TSCTSF by at least one of the followings:
selecting a TSCTSF that provides a time synchronization service;
selecting a TSCTSF based on operator configuration;
selecting a TSCTSF based on Time Sensitive Communication (TSC) information;
selecting a TSCTSF based on a session update request from the second network function;
selecting a TSCTSF based on an identifier of the second network function; or
selecting a TSCTSF associated with a first Policy Control Function (PCF), wherein the first PCF represents a PCF selected when a session is initially established.

In the TSCTSF that is associated with the first PCF, the association relationship may be understood as an association relationship in one or more of the following aspects:
configuration, a location, a capability, a name, pairing, network function discovery, registration information, and service scope.

When the PCF performs the selection of the TSCTSF, after receiving the session update request from the second network function, the first network function sends a session redirection request to the PCF, and carries TSC information in the session redirection request sent to the PCF. After receiving the session redirection request, the PCF performs a TSCTSF selection. FIG. 2 illustrates another implementation process of a session update method provided by an embodiment of the present application, which is applied to the PCF. This corresponds to the method process involved on the PCF side when the PCF performs the TSCTSF selection in the case that the first network function triggers session redirection. As shown in FIG. 2, the method includes the following steps:
step 201: receiving a session redirection request sent by a first network function;
step 202: selecting a Time Sensitive Communication and Time Synchronization Function (TSCTSF) based on the session redirection request;
step 203: triggering selected-TSCTSF-based session establishment.

In a process of the PCF triggering session establishment, in an embodiment, the PCF sends at least one of the following information to the selected TSCTSF:
all or part of the traffic characteristic parameters carried in a session update request;
transmission reference information of a session;
all or part of information of a first condition, wherein the first condition represents a condition for triggering the at least one of the operations;
a QoS request of the session; or
an active QoS request or a historical QoS request after initial session establishment.

The transmission reference information of the session refers to the transmission reference information of the session established with the PCF when the first network function initially creates the session; the QoS request of the session, and/or, an active QoS request or a historical QoS request after initial session establishment, refers to the QoS request when the session has not changed.

In the case that the first network function triggers sending at least one information to the second network function, the at least one information includes at least one of the followings:
rejecting a session update;
instructing the second network function to re-initiate a request;
instructing the second network function to re-initiate an initial request;
instructing the second network function to re-initiate a QoS parameter of the request;
instructing the second network function to resend a QoS request;
instructing the second network function to report a QoS request;
transmission reference information of a current session;
a reason for rejecting a request from the second network function; or
at least one unsatisfied parameter.

The reason for rejecting the request from the second network function includes at least one of the followings:
update of a session;
rejection of a request for update;
the QoS parameter that cannot be processed; or
a time sensitive QoS request that cannot be processed.

In the above, instructing the second network function to re-initiate the request may involve, for example, the first network function instructing the second network function to request Nnef_AFsessionWithQoS_Create.

In the case that the second network function requests a session update, the first network function supports triggering operations, including TSCTSF-based session establishment or insertion of the TSCTSF or deletion of the TSCTSF, session reestablishment with a PCF or the TSCTSF, and session redirection. These operations are intended to solve the technical problem of QoS update process failure within the domain in the related art. When the NEF receives the session update request from the AF and determines to invoke a switch between the TSCTSF and the PCF for the session, the NEF triggers the deletion of the original session on a 5G core network (5GC, 5G Core) side and the reestablishment of a new session. For example, it deletes the session between the NEF and the PCF, and reestablishes the session among NEF-TSCTSF-PCF, and then delivers a session update request.

Specifically, when the NEF needs to switch a session from a PCF-based session to a TSCTSF-based session, the implementation process of creating a new session within a domain is as follows:
1. the NEF sends a session creation request to the TSCTSF;
2. the TSCTSF sends a session creation request to the PCF;
3. the PCF sends a session creation response to the TSCTSF;
4. the TSCTSF sends a session creation response to the NEF.

The implementation process of deleting an original session within a domain is as follows:
1. the NEF sends a session deletion request to the PCF;
2. the PCF sends a session deletion response to the NEF.

The implementation process of updating the new session within the domain is as follows:
1. the NEF sends a session update request to the TSCTSF;
2. the TSCTSF sends a session update request to the PCF;
3. the PCF sends a session update response to the TSCTSF;
4. the TSCTSF sends a session update response to the NEF.

Furthermore, for a scenario where the AF requests a session update and the NEF needs to switch the session from a PCF-based session to a TSCTSF-based session, an interaction embodiment is provided in FIG. 3:
step 1: for an established session, an AF sends a session update request to request an update of the QoS of a session;
step 2: an NEF authorizes the AF's session update request and determines to trigger a network element different from the one used during session establishment;
step 3: the NEF triggers an original PCF during session establishment and sends a session deletion request to the original PCF;
step 4: the original PCF responds to the NEF with the session deletion request;
step 5: the NEF selects a TSCTSF and sends a session creation request to the selected TSCTSF;
step 6: the TSCTSF selects a new PCF and sends the session creation request to the new PCF;
step 7: optionally, the new PCF may trigger an SMF to perform a PDU session update;
step 8: the new PCF responds to the TSCTSF with the session creation request;
step 9: the TSCTSF responds to the NEF with the session creation request;
step 10: the NEF sends the session update request to the TSCTSF;
step 11: the TSCTSF sends the session update request to the new PCF;
step 12: optionally, the new PCF may trigger the SMF to perform the PDU session update;
step 13: the new PCF responds to the TSCTSF with the session update request;
step 14: the TSCTSF responds to the NEF with the session update request;
step 15: the NEF responds to the AF with the session update request.

When the NEF needs to invoke a switch from the TSCTSF to the PCF for the session, the implementation process of creating a new session within the domain is as follows:
1. the NEF sends a session creation request to the PCF;
2. the PCF sends a session creation response to the NEF.

The implementation process of deleting the original session within the domain is as follows:
1. the NEF sends a session deletion request to the TSCTSF;
2. the TSCTSF sends the session deletion request to the PCF;
3. the PCF sends a session deletion response to the TSCTS;
4. the TSCTSF sends the session deletion response to the NEF.

The implementation process for updating the new session within the domain is as follows:
1. the NEF sends a session update request to the PCF;
2. the PCF sends a session update response to the NEF.

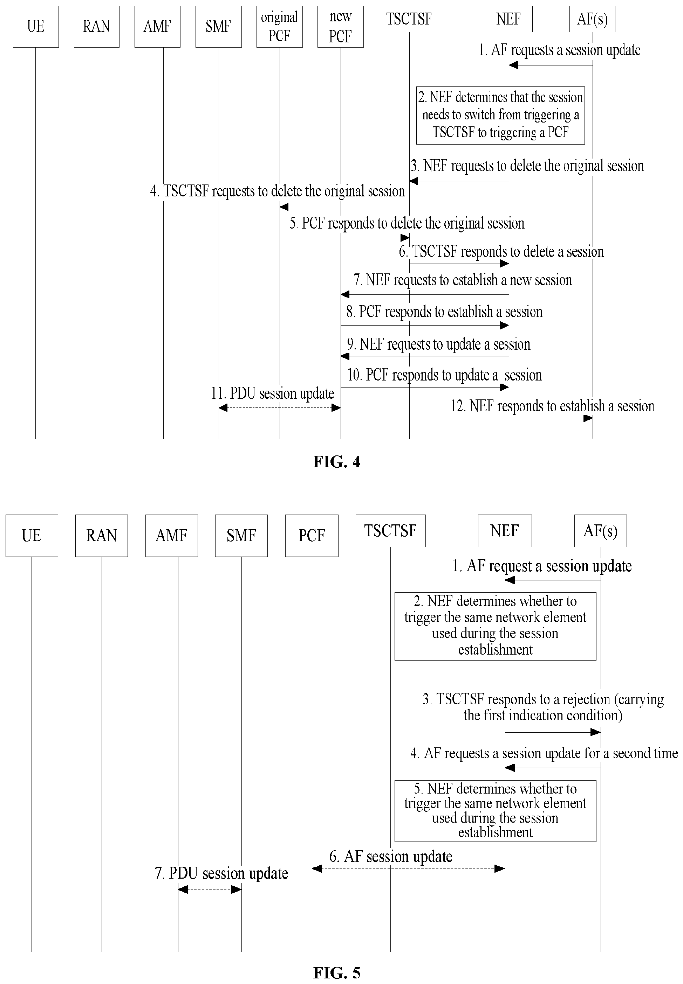

Furthermore, for a scenario where the AF requests a session update and the NEF needs to switch the session from a TSCTSF-based session to a PCF-based session, an interaction embodiment is provided in FIG. 4:
step 1: for an established session, an AF sends a session update request to request an update of the QoS of a session;
step 2: an NEF authorizes the AF's session update request and determines to trigger a network element different from the one used during session establishment;
step 3: the NEF triggers a TSCTSF during session establishment and sends a session deletion request to the TSCTSF;
step 4: the TSCTSF sends a session deletion request to the original PCF used during an original session establishment;
step 5: the original PCF responds to the TSCTSF with the session deletion request;
step 6: the TSCTSF responds to the NEF with the session deletion request;
step 7: the NEF selects a new PCF and sends a session creation request to the selected new PCF;
step 8: the new PCF responds to the NEF with the session creation request;
step 9: the NEF sends the session update request to the new PCF;
step 10: the new PCF responds to the NEF with the session update request;
step 11: optionally, the new PCF may trigger an SMF to perform a PDU session update;
step 12: the NEF responds to the AF with the session update request.

In the case that the second network function requests a session update, the first network function supports the triggered operation, and sends at least one indication to the second network function, which is used to solve the technical problem of QoS update process failure within the domain in the related art. When the NEF receives the session update request from the AF, the NEF rejects the session update request from the AF, and trigger the AF to re-initiate the session update request.

Furthermore, reference is made to the interaction embodiment in FIG. 5:
step 1: for an established session, an AF sends a session update request to request an update of the QoS of a session;
step 2: an NEF authorizes the AF's session update request and determines to trigger a network element different from the one used during session establishment;
step 3: the NEF rejects the AF's session update request and carries at least one indication, that is, the NEF indicates a condition that the AF's session update request needs to meet;
step 4: the AF re-initiates the session update request, and the new session update request meets the indication of the NEF.
step 5: the NEF determines whether to trigger the same network element used during the session establishment, and based on the result of the determination, performs the relevant steps of FIG. 3 or FIG. 4 accordingly;
step 6: update the session;
step 7: update a PDU session.

In an embodiment of the present application, in the case of requesting a session update, and within a domain, when the NEF determines to trigger a network element different from that of the original session, a normal progress of the session update can be guaranteed. Across domains, the NEF can indicate to the AF a condition that need to be met for the session update request, so that the AF re-initiates a session update request that meets the condition, thereby ensuring the normal progress of the session update. The above solution improves the session update process in the related art, reduces the failure probability of the session update request, optimizes a network exposure capability, and improves the network performance.

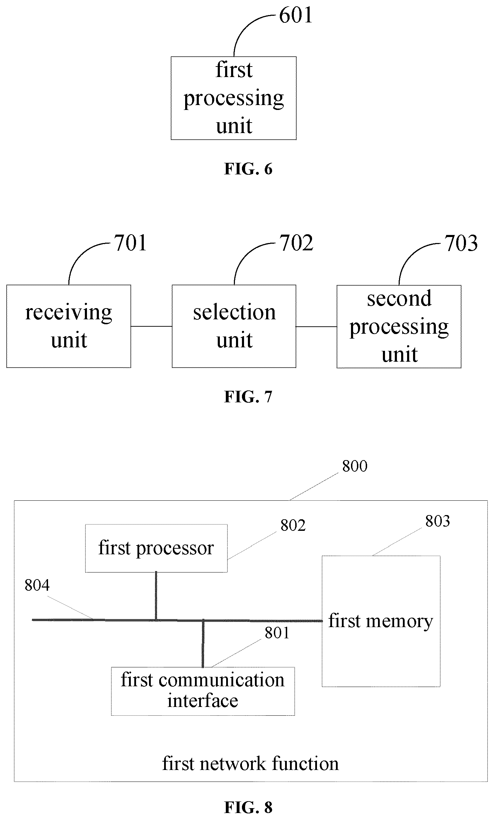

To implement the session update method on the first network function side according to the embodiment of the present application, the embodiments of the present application further provide a session update apparatus, which is configured on the first network function, as shown in FIG. 6, the apparatus includes:
a first processing unit 601, configured to support triggering at least one of the following operations:
Time Sensitive Communication and Time Synchronization Function (TSCTSF)-based session establishment or insertion of the TSCTSF or deletion of the TSCTSF;
session reestablishment with a Policy Control Function (PCF) or the TSCTSF;
session redirection; or
sending at least one information to a second network function.

In an embodiment, the first network function includes an NEF or an AF.

In an embodiment, the first network function is the NEF, and correspondingly, the first processing unit is further configured to trigger the at least one of the operations in the case that the NEF receives a session update request from the second network function.

In an embodiment, the second network function includes an AF.

In an embodiment, the supporting triggering the at least one of the following operations, including:
supporting triggering the at least one of the operations based on a first condition; wherein
the first condition comprises at least one of the followings:
   operator configuration;
   a session update request from the second network function;
   an identifier of the second network function;
   a traffic characteristic parameter provided by the second network function; or
   a support capability, wherein the support capability represents an operation that is supported by the first network function and determined through capability negotiation.

In an embodiment, the first processing unit 601 is further configured to support selecting the TSCTSF by at least one of the followings:
selecting a TSCTSF that provides a time synchronization service;
selecting a TSCTSF based on operator configuration;
selecting a TSCTSF based on Time Sensitive Communication (TSC) information;
selecting a TSCTSF based on a session update request from the second network function;
selecting a TSCTSF based on an identifier of the second network function; or
selecting a TSCTSF associated with a first Policy Control Function (PCF), wherein the first PCF represents a PCF selected when a session is initially established.

In an embodiment, the first processing unit 601 is further configured to support at least one of the following operations in the case of triggering the TSCTSF-based session establishment or the insertion of the TSCTSF:
creating a TSCTSF-based session;
sending first information to the TSCTSF to indicate that the TSCTSF-based session is an update of a PCF-based session; or
triggering an update of a PCF-based session.

In an embodiment, in the case of triggering the TSCTSF-based session establishment or the insertion of the TSCTSF, a Quality of Service (QoS) request of the session obtained by the TSCTSF is sent by the first network function and/or the PCF.

In an embodiment, the first processing unit 601 is further configured to support sending at least one of the following information to the TSCTSF in case of triggering the TSCTSF-based session establishment or the insertion of the TSCTSF:
all or part of the traffic characteristic parameters carried in a session update request;
transmission reference information of a session; or
all or part of information of a first condition, wherein the first condition represents a condition for triggering the at least one of the operations.

In an embodiment, the first processing unit 601 is further configured to support at least one of the following operations in the case of triggering the session reestablishment with the PCF or the TSCTSF:
triggering the TSCTSF-based session establishment;
sending second information to the TSCTSF to indicate that the TSCTSF-based session establishment is a completely new session establishment; or
triggering deletion of a PCF-based session.

The first processing unit 601 is further configured to support sending at least one of the following information to the TSCTSF in the case of triggering session reestablishment with the PCF or the TSCTSF:
all or part of the traffic characteristic parameters carried in a session update request;
transmission reference information of a session;
all or part of information of a first condition, wherein the first condition represents a condition for triggering the at least one of the operations;
a QoS request of the session; or
an active QoS request or a historical QoS request after initial session establishment.

In an embodiment, the traffic characteristic parameter carried in the session update request includes at least one of the followings:
a traffic burst arrival time;
a lifetime;
a traffic cycle;
a clock domain; or
a traffic direction.

In an embodiment, in the case of triggering session redirection, the method further includes:
selecting the TSCTSF; and/or
sending a session redirection request to the PCF.

In an embodiment, the at least one information includes at least one of the followings:
rejecting a session update;
instructing the second network function to re-initiate a request;
instructing the second network function to re-initiate an initial request;
instructing the second network function to re-initiate a QoS parameter of the request;
instructing the second network function to resend a QoS request;
instructing the second network function to report a QoS request;
transmission reference information of a current session;
a reason for rejecting a request from the second network function; or
at least one unsatisfied parameter.

In an embodiment, the reason for rejecting the request from the second network function includes at least one of the followings:
update of a session;
rejection of a request for update;
the QoS parameter that cannot be processed; or
a time sensitive QoS request that cannot be processed.

In practical applications, the first processing unit 601 can be implemented by a communication interface in the session update apparatus in combination with a processor.

To implement the session update method on the second network function side according to the embodiment of the present application, the embodiments of the present application further provide a session update apparatus, which is configured on the second network function, as shown in FIG. 7, the apparatus includes:
a receiving unit 701, configured to receive a session redirection request sent by a first network function;
a selection unit 702, configured to select a TSCTSF based on the session redirection request;
a second processing unit 703, configured to trigger selected-TSCTSF-based session establishment.

In an embodiment, the apparatus further includes:
a sending unit, configured to send, to the selected TSCTSF, at least one of the following information:
all or part of the traffic characteristic parameters carried in a session update request;
transmission reference information of a session;
all or part of information of a first condition, wherein the first condition represents a condition for triggering the at least one of the operations;
a QoS request of the session; or
an active QoS request or a historical QoS request after initial session establishment.

In an embodiment, the traffic characteristic parameter carried in the session update request includes at least one of the followings:
a traffic burst arrival time;
a lifetime;
a traffic cycle;
a clock domain; or
a traffic direction.

In an embodiment, the session redirection request carries TSC information of the session.

In practical applications, the above-mentioned units can be implemented by a processor in the session update apparatus in combination with a communication interface.

It should be noted that when performing a session update, the session update apparatus provided in the above embodiments is only exemplified by the division of the aforementioned program modules. In actual applications, the above processing can be assigned to different program modules as needed, that is, an internal structure of the apparatus is divided into different program modules to complete all or part of the processing described above. In addition, the session update apparatus and the session update method provided in the above embodiments share the same concept. For details on the specific implementation process, it may refer to the method embodiments, and thus will not be repeated herein.

Based on the hardware implementation of the above program modules, and in order to implement the method on the first network function side according to the embodiments of the present application, the embodiments of the present application further provide a first network function, as shown in FIG. 8, a first network function 800 includes:
a first communication interface 801, configured to exchange information with other network nodes;
a first processor 802, connected to the first communication interface 801 to implement information interaction with other network nodes, and configured to execute the method provided by one or more technical solutions on the first network function side when running a computer program. The computer program is stored in a first memory 803.

Specifically, the first communication interface 801 is configured to support triggering at least one of the following operations:
Time Sensitive Communication and Time Synchronization Function (TSCTSF)-based session establishment or insertion of the TSCTSF or deletion of the TSCTSF;
session reestablishment with a Policy Control Function (PCF) or the TSCTSF;
session redirection; or
sending at least one information to a second network function.

In an embodiment, the first network function includes an NEF or an AF.

In an embodiment, the first network function is the NEF, and correspondingly, the first communication interface 801 is further configured to trigger the at least one of the operations in the case that the NEF receives a session update request from the second network function.

In an embodiment, the second network function includes an AF.

In an embodiment, the supporting triggering the at least one of the following operations, including:
supporting triggering the at least one of the operations based on a first condition; wherein
the first condition comprises at least one of the followings:
   operator configuration;
   a session update request from the second network function;
   an identifier of the second network function;
   a traffic characteristic parameter provided by the second network function; or
   a support capability, wherein the support capability represents an operation that is supported by the first network function and determined through capability negotiation.

In an embodiment, the first processor 802 is further configured to support selecting the TSCTSF by at least one of the followings:
selecting a TSCTSF that provides a time synchronization service;
selecting a TSCTSF based on operator configuration;
selecting a TSCTSF based on Time Sensitive Communication (TSC) information;
selecting a TSCTSF based on a session update request from the second network function;
selecting a TSCTSF based on an identifier of the second network function; or
selecting a TSCTSF associated with a first Policy Control Function (PCF), wherein the first PCF represents a PCF selected when a session is initially established.

In an embodiment, the first communication interface 801 is further configured to support at least one of the following operations in the case of triggering the TSCTSF-based session establishment or the insertion of the TSCTSF:
creating a TSCTSF-based session;
sending first information to the TSCTSF to indicate that the TSCTSF-based session is an update of a PCF-based session; or
triggering an update of a PCF-based session.

In an embodiment, in the case of triggering the TSCTSF-based session establishment or the insertion of the TSCTSF, a Quality of Service (QoS) request of the session obtained by the TSCTSF is sent by the first network function and/or the PCF.

In an embodiment, the first communication interface 801 is further configured to support sending at least one of the following information to the TSCTSF in the case of triggering the TSCTSF-based session establishment or the insertion of the TSCTSF:
all or part of the traffic characteristic parameters carried in a session update request;
transmission reference information of a session; or
all or part of information of a first condition, wherein the first condition represents a condition for triggering the at least one of the operations.

In an embodiment, the first communication interface 801 is further configured to support at least one of the following operations in the case of triggering the session reestablishment with the PCF or the TSCTSF:
triggering the TSCTSF-based session establishment;
sending second information to the TSCTSF to indicate that the TSCTSF-based session establishment is a completely new session establishment; or
triggering deletion of a PCF-based session.

In an embodiment, the first communication interface 801 is further configured to support sending at least one of the following information to the TSCTSF in the case of triggering the session reestablishment with the PCF or the TSCTSF:
all or part of the traffic characteristic parameters carried in a session update request;
transmission reference information of a session;
all or part of information of a first condition, wherein the first condition represents a condition for triggering the at least one of the operations;
a QoS request of the session; or
an active QoS request or a historical QoS request after initial session establishment.

In an embodiment, the traffic characteristic parameter carried in the session update request includes at least one of the followings:
a traffic burst arrival time;
a lifetime;
a traffic cycle;
a clock domain; or
a traffic direction.

In an embodiment, the first communication interface 801 is further configured to, in the case of triggering the session redirection, select the TSCTSF; and/or
send a session redirection request to the PCF.

In an embodiment, the at least one information includes at least one of the followings:
rejecting a session update;
instructing the second network function to re-initiate a request;
instructing the second network function to re-initiate an initial request;
instructing the second network function to re-initiate a QoS parameter of the request;
instructing the second network function to resend a QoS request;
instructing the second network function to report a QoS request;
transmission reference information of a current session;
a reason for rejecting a request from the second network function; or
at least one unsatisfied parameter.

In an embodiment, the reason for rejecting the request from the second network function includes at least one of the followings:
update of a session;
rejection of a request for update;
the QoS parameter that cannot be processed; or
a time sensitive QoS request that cannot be processed.

It should be noted that the specific processing process of the first processor 802 and the first communication interface 801 can be understood by referring to the above methods.

Obviously, in practical applications, the various components in the first network function 800 are coupled together through a bus system 804. It can be understood that the bus system 804 is configured to realize the connection and communication among these components. In addition to the data bus, the bus system 804 further includes a power bus, a control bus and a status signal bus. However, for the sake of clarity, all buses are marked as the bus system 804 in FIG. 8.

In an embodiment of the present application, the first memory 803 is configured to store various types of data to support the operation of the first network function 800. Examples of such data include: any computer program for operating on the first network function 800.

The methods disclosed in the above embodiments of the present application can be applied to, or implemented by, the first processor 802. The first processor 802 may be an integrated circuit chip with signal processing capabilities. In the implementation process, each step of the above method can be accomplished by integrated logic circuits in hardware or by instructions in software in the first processor 802. The above-mentioned first processor 802 may be a general-purpose processor, a Digital Signal Processor (DSP), or other programmable logic devices, discrete gates or transistor logic devices, discrete hardware components, etc. The first processor 802 can implement or execute the various methods, steps and logic block diagrams disclosed in the embodiments of the present application. A general-purpose processor may be a microprocessor or any conventional processor, etc. The steps of the methods disclosed in the embodiments of the present application can be directly embodied as being executed by a hardware decoding processor, or being executed by a combination of hardware and software modules in the decoding processor. The software module may be stored in a storage medium, which is located in the first memory 803. The first processor 802 reads the information from the first memory 803 and, in combination with the hardware, completes the steps of the aforementioned methods.

In exemplary embodiments, the first network function 800 may be implemented by one or more Application Specific Integrated Circuits (ASICs), Digital Signal Processors (DSPs), Programmable Logic Devices (PLDs), Complex Programmable Logic Devices (CPLDs), Field Programmable Gate Arrays (FPGAs), general-purpose processors, controllers, Micro Controller Units (MCUs), microprocessors, or other electronic components to execute the aforementioned method.

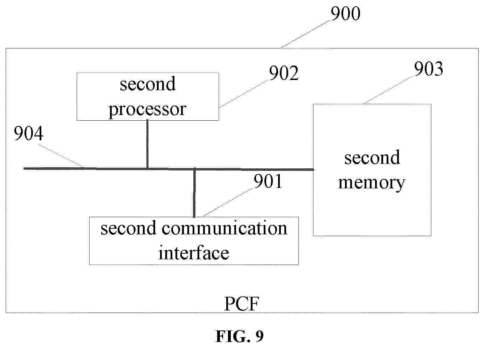

Based on the hardware implementation of the above program modules, and in order to implement the method on the PCF side according to the embodiment of the present application, the embodiment of the present application further provides a PCF, as shown in FIG. 9, the PCF 900 includes:
a second communication interface 901, configured to exchange information with other network nodes;
a second processor 902, connected to the second communication interface 901 to implement information exchange with other network nodes, and configured to execute the methods provided by one or more technical solutions on the PCF side when running a computer program. The computer program is stored in a second memory 903.

Specifically, the second communication interface 901 is configured to receive a session redirection request sent by the first network function;
the second processor 902 is configured to select a TSCTSF based on the session redirection request;
the second communication interface 901 is further configured to trigger selected-TSCTSF-based session establishment.

In an embodiment, the second communication interface 901 is further configured to send at least one of the following information to the selected TSCTSF:
all or part of the traffic characteristic parameters carried in a session update request;
transmission reference information of a session;
all or part of information of a first condition, wherein the first condition represents a condition for triggering the at least one of the operations;
a QoS request of the session; or
an active QoS request or a historical QoS request after initial session establishment.

In an embodiment, the traffic characteristic parameter carried in the session update request includes at least one of the followings:
a traffic burst arrival time;
a lifetime;
a traffic cycle;
a clock domain; or
a traffic direction.

In an embodiment, the session redirection request carries TSC information of the session.

It should be noted that the specific processing processes of the second processor 902 and the second communication interface 901 can be understood by referring to the above methods.

Obviously, in practical applications, the various components in the PCF 900 are coupled together through a bus system 904. It should be understood that the bus system 904 is configured to enable connection and communication between these components. In addition to the data bus, the bus system 904 further includes a power bus, a control bus and a status signal bus. However, for the sake of clarity, all buses are marked as bus system 904 in FIG. 9.

In an embodiment of the present application, the second memory 903 is configured to store various types of data to support the operation of the PCF 900. Examples of such data include: any computer program for operating on the PCF 900.

The methods disclosed in the above embodiments of the present application can be applied to, or implemented by, the second processor 902. The second processor 902 may be an integrated circuit chip with signal processing capabilities. In the implementation process, each step of the above method can be accomplished by integrated logic circuits in hardware or by instructions in software in the second processor 902. The above second processor 902 may be a general-purpose processor, a DSP, or another programmable logic device, a discrete gate or a transistor logic device, a discrete hardware component, etc. The second processor 902 can implement or execute the various methods, steps and logic block diagrams disclosed in the embodiments of the present application. A general-purpose processor may be a microprocessor or any conventional processor, etc. The steps of the methods disclosed in the embodiments of the present application can be directly embodied as being executed by a hardware decoding processor, or being executed by a combination of hardware and software modules in the decoding processor. The software module may be stored in a storage medium, which is located in the second memory 903. The second processor 902 reads the information from the second memory 903 and, in combination with the hardware, completes the steps of the aforementioned methods.

In an exemplary embodiment, PCF 900 may be implemented by one or more ASICs, DSPs, PLDs, CPLDs, FPGAs, general-purpose processors, controllers, MCUs, Microprocessors, or other electronic components to perform the aforementioned methods.

It can be understood that the memory (a first memory 803, a second memory 903) in the embodiments of the present application may be a volatile memory or a non-volatile memory, and may also include both volatile and non-volatile memory. The non-volatile memory may be a Read-Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, an optical disc, or a Compact Disc Read-Only Memory (CD-ROM); the magnetic surface memory may be a disk memory or a tape memory. The volatile memory may be a Random Access Memory (RAM), which may serve as external high-speed cache. By way of example but not limitation, many forms of RAM are available, such as Static Random Access Memory (SRAM), Synchronous Static Random Access Memory (SSRAM), Dynamic Random Access Memory (DRAM), synchronous dynamic random access memory (SDRAM), Double Data Rate Synchronous Dynamic Random Access Memory (DDRSDRAM), Enhanced Synchronous Dynamic Random Access Memory (ESDRAM), SyncLink Dynamic Random Access Memory (SLDRAM), and Direct Memory Bus Random Access Memory (DRRAM). The memory described in the embodiments of the present application is intended to include, but is not limited to, these and any other suitable types of memory.

In an exemplary embodiment, the embodiments of the present application further provide a storage medium, namely a computer storage medium, specifically a computer-readable storage medium. For example, this may include a first memory 803 storing a computer program, which can be executed by the first processor 802 of the first network function 800 to implement the steps of the aforementioned methods on the first network function side. Similarly, this may include a second memory 903 storing a computer program, which can be executed by the second processor 902 of the PCF 900 to implement the steps of the aforementioned methods on the PCF side. The computer-readable storage medium may be a memory such as FRAM, ROM, PROM, EPROM, EEPROM, flash memory, magnetic surface memory, optical disk, or CD-ROM.

It should be noted that terms "first", "second" and the like are used to distinguish similar objects, and are not necessarily used to describe a specific order or sequence.

In this document, the term "and/or" is only a description of the association relationship between the associated objects, indicating that three relationships may exist. For example, A and/or B may indicate: A alone, both A and B exist, and B alone. In addition, the term "at least one" herein refers to any one of a plurality, or any combination of at least two from among a plurality. For example, "including at least one of A, B, and C" may indicate including any one or more elements selected from the set consisting of A, B, and C.

In addition, the technical solutions described in the embodiments of the present application can be combined in any manner, as long as there is no conflict.

The above are only preferred embodiments of the present application and not intended to limit the protection scope of the present application.

## Claims

1. A session update method, **characterized by** being applied to a first network function, comprising:
supporting triggering at least one of the following operations:
Time Sensitive Communication and Time Synchronization Function (TSCTSF)-based session establishment or insertion of the TSCTSF or deletion of the TSCTSF;
session reestablishment with a Policy Control Function (PCF) or the TSCTSF;
session redirection; or
sending at least one information to a second network function.

2. The method according to claim 1, **characterized in that** the first network function comprises a Network Exposure Function (NEF) or an Application Function (AF).

3. The method according to claim 2, **characterized in that** the first network function is the NEF, and correspondingly, the method further comprises:
in the case that the NEF receives a session update request from the second network function, triggering the at least one of the operations.

4. The method according to any one of claims 1 to 3, **characterized in that** the second network function comprises an AF.

5. The method according to any one of claims 1 to 4, **characterized by** the supporting triggering the at least one of the following operations, comprising:
supporting triggering the at least one of the operations based on a first condition; wherein
the first condition comprises at least one of the followings:
operator configuration;
a session update request from the second network function;
an identifier of the second network function;
a traffic characteristic parameter provided by the second network function; or
a support capability, wherein the support capability represents an operation that is supported by the first network function and determined through capability negotiation.

6. The method according to any one of claims 1 to 5, **characterized by** further comprising:
supporting selecting the TSCTSF by at least one of the followings:
selecting a TSCTSF that provides a time synchronization service;
selecting a TSCTSF based on operator configuration;
selecting a TSCTSF based on Time Sensitive Communication (TSC) information;
selecting a TSCTSF based on a session update request from the second network function;
selecting a TSCTSF based on an identifier of the second network function; or
selecting a TSCTSF associated with a first Policy Control Function (PCF), wherein the first PCF represents a PCF selected when a session is initially established.

7. The method according to any one of claims 1 to 6, **characterized by** further comprising:
in the case of triggering the TSCTSF-based session establishment or the insertion of the TSCTSF, supporting at least one of the following operations:
creating a TSCTSF-based session;
sending first information to the TSCTSF to indicate that the TSCTSF-based session is an update of a PCF-based session; or
triggering an update of a PCF-based session.

8. The method according to any one of claims 1 to 6, **characterized in that**, in the case of triggering the TSCTSF-based session establishment or the insertion of the TSCTSF, a Quality of Service (QoS) request of the session obtained by the TSCTSF is sent by the first network function and/or the PCF.

9. The method according to any one of claims 1 to 6, **characterized by** further comprising:
in the case of triggering the TSCTSF-based session establishment or the insertion of the TSCTSF, supporting sending at least one of the following information to the TSCTSF:
all or part of the traffic characteristic parameters carried in a session update request;
transmission reference information of a session; or
all or part of information of a first condition, wherein the first condition represents a condition for triggering the at least one of the operations.

10. The method according to any one of claims 1 to 9, **characterized by** further comprising:
in the case of triggering the session reestablishment with the PCF or the TSCTSF, supporting at least one of the following operations:
triggering the TSCTSF-based session establishment;
sending second information to the TSCTSF to indicate that the TSCTSF-based session establishment is a completely new session establishment; or
triggering deletion of a PCF-based session.

11. The method according to any one of claims 1 to 9, **characterized by** further comprising:
in the case of triggering the session reestablishment with the PCF or the TSCTSF, supporting sending at least one of the following information to the TSCTSF:
all or part of the traffic characteristic parameters carried in a session update request;
transmission reference information of a session;
all or part of information of a first condition, wherein the first condition represents a condition for triggering the at least one of the operations;
a QoS request of the session; or
an active QoS request or a historical QoS request after initial session establishment.

12. The method according to claim 9 or 11, **characterized in that** the traffic characteristic parameter carried in the session update request comprises at least one of the followings:
a traffic burst arrival time;
a lifetime;
a traffic cycle;
a clock domain; or
a traffic direction.

13. The method according to any one of claims 1 to 10, **characterized in that**, in the case of triggering the session redirection, the method further comprises:
selecting the TSCTSF; and/or
sending a session redirection request to the PCF.

14. The method according to any one of claims 1 to 13, **characterized in that** the at least one information comprises at least one of the followings:
rejecting a session update;
instructing the second network function to re-initiate a request;
instructing the second network function to re-initiate an initial request;
instructing the second network function to re-initiate a QoS parameter of the request;
instructing the second network function to resend a QoS request;
instructing the second network function to report a QoS request;
transmission reference information of a current session;
a reason for rejecting a request from the second network function; or
at least one unsatisfied parameter.

15. The method according to claim 14, **characterized in that** the reason for rejecting the request from the second network function comprises at least one of the followings:
update of a session;
rejection of a request for update;
the QoS parameter that cannot be processed; or
a time sensitive QoS request that cannot be processed.

16. A session update method, **characterized by** being applied to a Policy Control Function (PCF), comprising:
receiving a session redirection request sent by a first network function;
selecting a Time Sensitive Communication and Time Synchronization Function (TSCTSF) based on the session redirection request;
triggering selected-TSCTSF-based session establishment.

17. The method according to claim 16, **characterized by** further comprising:
sending, to the selected TSCTSF, at least one of the following information:
all or part of the traffic characteristic parameters carried in a session update request;
transmission reference information of a session;
all or part of information of a first condition, wherein the first condition represents a condition for triggering at least one operation;
a QoS request of the session; or
an active QoS request or a historical QoS request after initial session establishment.

18. The method according to claim 17, **characterized in that** the traffic characteristic parameter carried in the session update request comprises at least one of the followings:
a traffic burst arrival time;
a lifetime;
a traffic cycle;
a clock domain; or
a traffic direction.

19. The method according to any one of claims 16 to 18, **characterized in that** the session redirection request carries TSC information of a session.

20. A session update apparatus, **characterized by** comprising:
a first processing unit, configured to support triggering at least one of the following operations:
Time Sensitive Communication and Time Synchronization Function (TSCTSF)-based session establishment or insertion of the TSCTSF or deletion of the TSCTSF;
session reestablishment with a Policy Control Function (PCF) or the TSCTSF;
session redirection; or
sending at least one information to a second network function.

21. A session update apparatus, **characterized by** comprising:
a receiving unit, configured to receive a session redirection request sent by a first network function;
a selection unit, configured to select a TSCTSF based on the session redirection request;
a second processing unit, configured to trigger selected-TSCTSF-based session establishment.

22. A first network function, **characterized by** comprising: a first processor and a first communication interface; wherein
the first communication interface is configured to support triggering at least one of the following operations:
Time Sensitive Communication and Time Synchronization Function (TSCTSF)-based session establishment or insertion of the TSCTSF or deletion of the TSCTSF;
session reestablishment with a Policy Control Function (PCF) or the TSCTSF;
session redirection; or
sending at least one information to a second network function.

23. A Policy Control Function (PCF), **characterized by** comprising a second processor and a second communication interface; wherein
the second communication interface is configured to receive a session redirection request sent by a first network function;
the second communication interface is further configured to select a Time Sensitive Communication and Time Synchronization Function (TSCTSF) based on the session redirection request, and to trigger selected-TSCTSF-based session establishment.

24. A first network function, **characterized by** comprising a first processor and a first memory configured to store a computer program executable on a processor,
wherein the first processor is configured to execute the computer program to perform the steps of the method according to any one of claims 1 to 15.

25. A Policy Control Function (PCF), **characterized by** comprising a second processor and a second memory configured to store a computer program executable on the processor,
wherein the second processor is configured to execute the computer program to perform the steps of the method according to any one of claims 16 to 19.

26. A storage medium storing a computer program, **characterized in that** the computer program is used to be executed by a processor to implement the steps of the method according to any one of claims 1 to 15, or implement the steps of the method according to any one of claims 16 to 19.
